# EUROPEAN PATENT APPLICATION

(11) **EP 4 746 188 A1**
(43) Date of publication of application: **20.05.2026**
(21) Application number: 24895775.5
(22) Date of filing: 16.08.2024
(51) Int. Cl.: H01M 50/593, B65H 23/34

(54) **FLATTENING DEVICE AND BATTERY ASSEMBLY SYSTEM**

(30) Priority: 28.11.2023 CN 202311621514
(71) Applicant: Contemporary Amperex Technology Co., Limited, Ningde, Fujian 352100 (CN)
(72) Inventor: RONG, Jianying, Ningde, Fujian 352100 (CN)
(74) Representative: Ziebig Hengelhaupt Intellectual Property Attorneys Patentanwaltskanzlei PartGmbB
(86) International application number: PCT/CN2024/112836
(87) International publication number: WO 2025/112674

(57) **Abstract**

The present application provides a smoothing apparatus and a battery assembly system to solve the problem of occurrence of wrinkles on an insulating protective film outside an electrode assembly in the prior art. The smoothing apparatus includes a frame, a drive mechanism, and a pair of rollers that are matched. The rollers are rotatably connected to the frame and used to smooth a member to be smoothed; and the drive mechanism is disposed on the frame and connected to the rollers, and is used to drive the pair of rollers to rotate synchronously. In this way, the drive mechanism drives the pair of rollers to rotate synchronously, so that linear speeds of outer surfaces of the two rollers are the same, thereby solving the problem in the related art that two drive sources are used to respectively drive a pair of rollers but rotational speeds are different.

## Description

### CROSS-REFERENCE TO RELATED APPLICATIONS

The present application claims priority to Chinese Patent Application No. 2023116215144 filed on November 28, 2023, which is incorporated herein by reference in its entirety.

### TECHNICAL FIELD

The present application relates to the technical field of batteries, and in particular, to a smoothing apparatus and a battery assembly system.

### BACKGROUND

A battery includes a housing and an electrode assembly, and the electrode assembly is mounted into the housing. Because the electrode assembly is coated with an insulating protective film, the insulating protective film is wrinkled, and the wrinkled insulating protective film exposes the electrode assembly, and an exposed portion of the electrode assembly is in contact with the housing, which may cause safety accidents such as short circuit and explosion of the battery.

### SUMMARY

The technical problem mainly to be solved by the present application is to provide a smoothing apparatus and a battery assembly system to solve the problem of occurrence of wrinkles on an insulating protective film outside an electrode assembly in the prior art.

To solve the above technical problem, the present application employs a first technical solution: Provided is a smoothing apparatus, comprising a frame, a drive mechanism, and a pair of rollers that are matched. The rollers are rotatably connected to the frame and used to smooth a member to be smoothed; and the drive mechanism is disposed on the frame and connected to the rollers, and is used to drive the pair of rollers to rotate synchronously. In this way, the drive mechanism drives the pair of rollers to rotate synchronously, so that linear speeds of outer surfaces of the two rollers are the same, thereby solving the problem in the related art that two drive sources are used to respectively drive a pair of rollers but rotational speeds are different.

In some embodiments, the drive mechanism comprises a rack and a pair of gears; the gear is disposed coaxially with the roller, and the pair of gears are both engaged with the rack; and the rack extends in a first direction and is movable in the first direction relative to the frame, wherein during movement of the rack in the first direction, at least a portion of the rack drives the pair of gears to rotate synchronously. In this way, because the gear is disposed coaxially with the roller, and during movement of the rack in the first direction, at least a portion of the rack drives the pair of gears to rotate synchronously, rotational speeds (that is, angular speeds) of the roller and the gear are the same, and thus rotational speeds (that is, linear speeds of outer surfaces of the rollers) of the two rollers are the same.

In some embodiments, the smoothing apparatus further comprises an elastic member and a pair of sliding members; the sliding member is slidably connected to the frame, and the sliding member slides in a second direction relative to the frame; the roller is rotatably connected to the sliding member; the elastic member is configured to drive the pair of sliding members to move close to or away from each other in the second direction; and the second direction is perpendicular to the first direction and perpendicular to an axis direction of the roller; and as the rack moves in the first direction, a distance between the pair of rollers in the second direction first gradually decreases to a preset spacing and then gradually increases.

In this way, as the rack moves in the first direction, the pair of sliding members are driven by the elastic member to move close to or away from each other in the second direction, so that the pair of rollers move close to or away from each other in the second direction, and the pair of gears and the rack are always engaged. As the rack moves in the first direction, the distance between the pair of rollers in the second direction first gradually decreases to the preset spacing and then gradually increases. Therefore, when the distance between the two rollers gradually decreases, the two rollers gradually move close to an electrode assembly. When the distance between the two rollers is the preset spacing, the two rollers clamp the electrode assembly, so that the two rollers smooth the electrode assembly; and the linear speeds of the outer surfaces of the two rollers are the same as a speed at which a housing-entering apparatus pushes the electrode assembly, so that the electrode assembly can be placed into a housing, thereby reducing occurrence of wrinkles on an insulating protective film outside the electrode assembly. When the distance between the two rollers gradually increases, the two rollers gradually separate from the electrode assembly.

In some embodiments, in the second direction, the rack has two opposite tooth flanks, and the pair of gears are respectively engaged with the two tooth flanks of the rack. One of the two tooth flanks is an inwardly concave tooth flank, and the other tooth flank is parallel to the first direction; or the two tooth flanks are both inwardly concave tooth flanks. In this way, two gears can be driven to rotate through one rack, which simplifies a structure.

In some embodiments, the inwardly concave tooth flank comprises a first-segment tooth flank, a second-segment tooth flank, and a third-segment tooth flank that are connected in sequence; the second-segment tooth flank is parallel to the first direction; and in the first direction, sizes of a plurality of tooth structures of the first-segment tooth flank first gradually decrease, and sizes of a plurality of tooth structures of the third-segment tooth flank first gradually increase, wherein the size of the tooth structure is a size between a tooth structure and a center line of the rack in the second direction; and the center line extends in the first direction.

In this way, the first-segment tooth flank, the second-segment tooth flank, and the third-segment tooth flank are all linear tooth flanks, and the first-segment tooth flank and the third-segment tooth flank are obliquely connected to both ends of the second-segment tooth flank, so that when the gear is engaged with the inwardly concave tooth flank, a distance between the gear and the center line gradually decreases to be constant and then increases. In addition, a linear tooth flank is easy to manufacture or less expensive.

In some embodiments, an included angle between the first-segment tooth flank and the second-segment tooth flank is 120° to 150°; and/or an included angle between the third-segment tooth flank and the second-segment tooth flank is 120° to 150°.

In this way, when the included angle is less than 120°, the size of the first-segment tooth flank in the first direction is relatively small, and when the rack moves slightly, the gear is engaged with the second-segment tooth flank, which makes a rotational speed of the gear engaged with the first-segment tooth flank relatively high. When the included angle is less than 150°, the size of the first-segment tooth flank in the first direction is relatively large, which makes the rack relatively heavy. For an included angle effect of the third-segment tooth flank, reference may be made to the included angle effect of the first-segment tooth flank.

In some embodiments, the rack is symmetrically disposed along a symmetry axis parallel to the first direction and is symmetrically disposed along a symmetry axis parallel to the second direction. In this way, the rack has a relatively simple structure and is easy to manufacture.

In some embodiments, the elastic member comprises two compression elastic members, the compression elastic members are connected between the frame and the sliding members, and the compression elastic members are respectively located on sides that are of the two rollers and that are away from each other; or the elastic member comprises a tensile elastic member, and the tensile elastic member is connected between the pair of sliding members. In this way, when the rack moves in the first direction, the two gears are engaged with the rack, and the pair of rollers move close to or away from each other under the action of pushing forces generated by the two compression elastic members and/or a pulling force generated by the tensile elastic member.

In some embodiments, the rack comprises a first rack and a second rack that are arranged in the second direction; and the pair of gears are located between the first rack and the second rack, and are respectively engaged with a tooth flank of the first rack and a tooth flank of the second rack, wherein the tooth flank of the first rack is an outwardly convex tooth flank, and the tooth flank of the second rack is parallel to the first direction; or the tooth flank of the first rack and the tooth flank of the second rack are both outwardly convex tooth flanks.

In this way, the first rack and the second rack are respectively engaged with the two gears, and when the first rack and the second rack move synchronously in the first direction, the first rack and the second rack drive the two gears to rotate. When the total weight of the first rack and the second rack is not changed, the distance between the two rollers is changed by changing mounting positions of the first rack and the second rack, so that the pair of rollers can clamp electrode assemblies with different sizes, etc.

In some embodiments, the smoothing apparatus further comprises a sliding rail, the sliding rail is disposed on the frame, and the sliding member is slidably disposed on the sliding rail; or the frame has a sliding groove, and the sliding member is slidably disposed on the sliding groove. In this way, the provided sliding rail and/or sliding groove can enable the sliding member to slide relative to the frame.

In some embodiments, the sliding member has a mounting hole, and the roller is rotatably disposed in the mounting hole. In this way, a rotational connection between the sliding member and the roller can be implemented without the need for other components.

To solve the above technical problem, the present application provides a second technical solution: Provided is a battery assembly system, comprising a conveying device, an assembly device, and the above smoothing apparatus. The conveying device is used to convey a structure to be assembled to each station of the assembly device; the station of the assembly device comprises a housing-entering apparatus; the housing-entering apparatus is used to mount an electrode assembly into a housing from an open end of the housing; and when the electrode assembly is mounted into the housing, the pair of rollers of the smoothing apparatus are used to clamp and smooth the electrode assembly passing through the pair of rollers. Because the battery assembly system comprises the above smoothing apparatus, the battery assembly system has the effects of the above smoothing apparatus, and details are not described again.

### DESCRIPTION OF DRAWINGS

To describe technical solutions in embodiments of the present application more clearly, the following briefly describes the accompanying drawings for describing the embodiments. It is clear that the accompanying drawings described in the following are merely some embodiments of the present application. Those of ordinary skill in the art can still derive other accompanying drawings from these accompanying drawings without creative efforts.
FIG. 1 is a front view of a smoothing apparatus according to the present application;
FIG. 2 is a top view of a smoothing apparatus according to the present application;
FIG. 3 is a schematic diagram of a structure in which a rack is engaged with a pair of gears according to the present application;
FIG. 4 is a front view of another smoothing apparatus according to the present application;
FIG. 5 is a top view of another smoothing apparatus according to the present application;
FIG. 6 is a top view of still another smoothing apparatus according to the present application;
FIG. 7 is a schematic diagram of another structure in which a rack is engaged with a pair of gears according to the present application;
FIG. 8 is a top view of yet another smoothing apparatus according to the present application;
FIG. 9 is a schematic diagram of a structure in which a first rack and a second rack are engaged with a pair of gears according to the present application;
FIG. 10 is a front view of a battery assembly system according to the present application; and
FIG. 11 is a top view of a battery assembly system according to the present application.

In the figures: 1. smoothing apparatus; 11. frame; 12. drive mechanism; 122. rack; 1221. first rack; 1222. second rack; 123. first-segment tooth flank; 124. second-segment tooth flank; 125. third-segment tooth flank; 121. gear; 132. rotating shaft; 133. roller; 14. sliding rail; 15. elastic member; 16. sliding member; 17. drive member; 2. housing; 3. electrode assembly; 4. conveying device; 5. assembly device; and 51. housing-entering apparatus.

### DESCRIPTION OF EMBODIMENTS

The following describes solutions in embodiments of the present application in detail with reference to accompanying drawings of the specification.

In the following description, for the purpose of illustration rather than limitation, specific details such as specific system structures, interfaces, and techniques are proposed to facilitate a thorough understanding of the present application.

The following clearly and completely describes the technical solutions in the embodiments of the present application with reference to the accompanying drawings in the embodiments of the present application. Apparently, the described embodiments are merely some but not all of the embodiments of the present application. All other embodiments obtained by those of ordinary skill in the art based on the embodiments of the present application without creative efforts shall fall within the protection scope of the present application.

The terms "first", "second", and "third" in the present application are only used for descriptive purposes, and should not be construed as indicating or implying relative importance or implicitly indicating the number of technical features indicated. Thus, features defined by "first", "second", and "third" may explicitly or implicitly include at least one of the features. In the description of the present application, the meaning of "a plurality of" is two or more, such as two and three, unless otherwise specifically defined. All directional indications (such as upper, lower, left, right, front, back,...) in the embodiments of the present application are merely used to explain the relative position relationship, movement situation, etc. between components in a specific posture (as shown in the drawings), and if the specific posture changes, the directional indication also changes. In addition, the terms "include", "be provided with", and any other variants thereof are intended to cover a non-exclusive inclusion. For example, a process, method, system, product, or device that includes a series of steps or units is not limited to the listed steps or units, but optionally further includes steps or units that are not listed, or optionally further includes other steps or units inherent to the process, method, product, or device.

Reference to "an embodiment" herein means that a particular feature, structure, or characteristic described with reference to the embodiment can be included in at least one embodiment of the present application. The phrase in various places in the description does not necessarily all refer to the same embodiment, or a separate or alternative embodiment mutually exclusive of other embodiments. It is explicitly and implicitly understood by a person skilled in the art that the embodiments described herein may be combined with other embodiments.

In the related art, a battery includes a housing and an electrode assembly (also referred to as a cell), the electrode assembly is coated with an insulating protective film, and the electrode assembly is mounted into a housing by using a housing-entering apparatus and a smoothing apparatus, thereby reducing occurrence of wrinkles on the insulating protective film outside the electrode assembly. For the housing-entering apparatus, reference may be made to a housing-entering apparatus described below.

An existing smoothing apparatus includes two roller mechanisms, each roller mechanism includes a drive source and a roller, and the drive source drives the roller to rotate. The electrode assembly can be smoothed through cooperation of two rollers and then mounted into the housing. However, when a problem such as a control failure occurs in drive sources of the two roller mechanisms (for example, there is a difference between currents received by two drive motors), rotational speeds of the two drive sources driving the rollers are different; the two rollers with different rotational speeds cause the insulating protective film of the electrode assembly located between the two rollers to wrinkle, thereby exposing the electrode assembly. An exposed portion of the electrode assembly is in contact with the housing, which may cause safety accidents such as short circuit and explosion of the battery.

The embodiments of the present application provide a smoothing apparatus, which can be used in a process of mounting an electrode assembly into a housing, and the electrode assembly can be smoothed by using the smoothing apparatus and then mounted into the housing. Therefore, the problem of occurrence of wrinkles on an insulating protective film coated outside the electrode assembly is solved, so that the insulating protective film does not expose the electrode assembly, thereby reducing accidents of a battery.

Certainly, the smoothing apparatus may also be used in other fields. For example, the smoothing apparatus may be used to transport a lithium strip, an electrode plate, etc. For example, the lithium strip is located between two rollers of the smoothing apparatus, and the two rollers transport the lithium strip out when rotating. For another example, the smoothing apparatus may be used to extend a board. For example, the board is placed between the two rollers, and the length or width of the board is extended and the thickness of the board is reduced by pressing of the two rotating rollers. The material of the board may be a metal, and the metal may be a simple metal (such as lithium, iron, aluminum, copper, or silver), or the metal may be an alloy of the above simple metals (such as an aluminum alloy, a lithium alloy, an iron alloy, a silver alloy, or a copper alloy). The following description is made by taking an example in which the smoothing apparatus is used to smooth the electrode assembly.

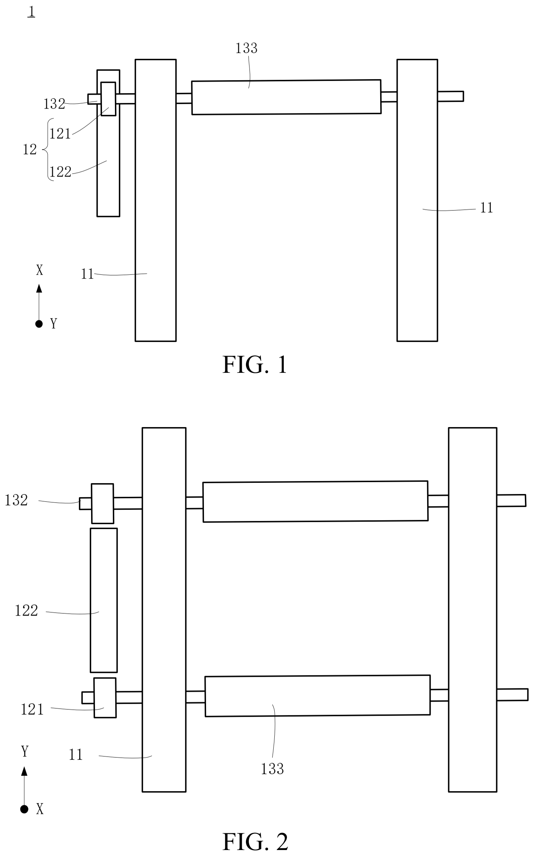

Referring to FIG. 1 and FIG. 2, a smoothing apparatus 1 may include a frame 11, a pair of rollers 133 that are matched, and a drive mechanism 12; the rollers 133 are rotatably connected to the frame 11 and used to smooth a member to be smoothed; and the drive mechanism 12 is disposed on the frame 11 and connected to the rollers 133, and is used to drive the pair of rollers 133 to rotate synchronously. In this way, the drive mechanism 12 drives the pair of rollers 133 to rotate synchronously, so that linear speeds of outer surfaces of the two rollers 133 are the same, thereby solving the problem in the related art that two drive sources are used to respectively drive a pair of rollers but rotational speeds are different.

In a process in which a housing-entering apparatus 51 mounts an electrode assembly into a housing, the electrode assembly passes between the two rollers 133, and because speeds of the two rollers 133 are the same, the electrode assembly can be smoothed, so that the electrode assembly is directly opposite to an open end of the housing (that is, a gap between the two rollers 133 is directly opposite to the open end of the housing), and the electrode assembly can directly enter the housing, thereby solving a problem that the electrode assembly is scratched by the housing in a process of the electrode assembly entering the housing, resulting in occurrence of wrinkles on an insulating protective film.

In some embodiments, the drive mechanism 12 may include a driving wheel and a pair of driven wheels, the driven wheel is disposed coaxially with the roller 133, and the driving wheel drives the pair of driven wheels to rotate synchronously through a belt or a chain, thereby causing the pair of rollers 133 to rotate synchronously. In some examples, the drive mechanism 12 may include a drive member. The drive member is mounted on the frame 11, and the drive member is connected to the driving wheel and used to drive the driving wheel to rotate. For example, the drive member can drive a motor.

In some embodiments, the drive mechanism 12 may include a driving gear and a pair of driven gears, and the driven gear is disposed coaxially with the roller 133; and the driving gear is engaged with both of the pair of driven gears, and when the driving gear rotates, the driving gear drives the pair of driven gears to rotate synchronously, thereby causing the pair of rollers 133 to rotate synchronously. In some examples, the drive mechanism 12 may include a drive member. The drive member is mounted on the frame 11. The drive member is connected to the driving gear and used to drive the driving gear to rotate. For example, the drive member can drive a motor.

In some embodiments, the drive mechanism 12 may include a rack 122 and a pair of gears 121; the gear 121 is disposed coaxially with the roller 133, and the pair of gears 121 are both engaged with the rack 122; the rack 122 extends in a first direction X and is movable in the first direction X relative to the frame 11; and during movement of the rack 122 in the first direction X, at least a portion of the rack 122 drives the pair of gears 121 to rotate synchronously. In some examples, the drive mechanism 12 may include a drive member 17. The drive member 17 may be mounted on the frame. The drive member 17 is connected to the rack 122 and used to drive the rack 122 to move in the first direction X. For example, the drive member 17 may be a mechanism that can be extended and retracted (which may be referred to as a telescopic mechanism) in the first direction X, and the telescopic mechanism drives the rack 122 to move in the first direction X. The telescopic mechanism may be a hydraulic telescopic mechanism, a pneumatic telescopic mechanism, an electric push rod, etc.

In this way, because the gear 121 is disposed coaxially with the roller 133, during the movement of the rack 122 in the first direction X, at least a portion of the rack 122 drives the pair of gears 121 to rotate synchronously, so that rotational speeds (that is, angular speeds) of the roller 133 and the gear 121 are the same, and thus rotational speeds of the two rollers 133 (that is, linear speeds of outer surfaces of the rollers 133) are the same.

The embodiments of the present application provide a comparative solution in which a pair of belt roller mechanisms that are matched may be included. The belt roller mechanism may include a mounting frame, an air cylinder, a roller, a belt, and a drive motor; and the air cylinder, the belt, and the drive motor are all disposed on the mounting frame, and the drive motor drives the roller to rotate through the belt. The roller is slidably disposed on the mounting frame; the air cylinder is connected to the roller and used to push the roller to slide, so that rollers in the pair of belt roller mechanisms move close to or away from each other. When the rollers in the pair of belt roller mechanisms move close to each other, the rollers in the pair of belt roller mechanisms clamp an electrode assembly and smooth the electrode assembly. When the rollers in the pair of belt roller mechanisms move away from each other, the rollers in the pair of belt roller mechanisms are separated from the electrode assembly. In this way, the electrode assembly is moved to a position between the rollers in the pair of belt roller mechanisms by using a housing-entering apparatus, and the electrode assembly is pushed into the housing. In a process of pushing the electrode assembly into the housing by using the housing-entering apparatus, the air cylinder is first controlled to make the rollers in the pair of belt roller mechanisms move close to each other to clamp the electrode assembly, to smooth the electrode assembly. Then, with the push of the housing-entering apparatus, the electrode assembly enters an open end of the housing. Finally, the air cylinder is controlled to make the rollers in the pair of belt roller mechanisms move away from each other, so that the rollers in the pair of belt roller mechanisms are separated from the electrode assembly.

However, in each belt roller mechanism, the drive motor drives the roller to rotate through the belt. When a problem such as a control failure occurs in drive motors in the pair of belt roller mechanisms (for example, there is a difference between currents received by the two drive motors), rotational speeds of the two drive motors are different, resulting in different rotational speeds of the two rollers; and the two rollers with different rotational speeds cause an insulating protective film of the electrode assembly located between the two rollers to wrinkle.

Compared with the belt roller mechanism in the comparative solution, one power source (for example, the above drive member 17) is used in the embodiments of the present application, and the drive member 17 drives the rack 122 to move in the first direction X, so that speeds of the two gears 121 engaged with the rack 122 are the same, and thus the rotational speeds of the two rollers 133 are the same. A problem that the rotational speeds of the two rollers 133 are different due to the power source is solved, and costs are also saved. Furthermore, stability is increased, a failure rate is reduced, and a product quality rate is increased.

The rack 122 extends in the first direction X, that is, a length direction of the rack 122 is parallel to the first direction X. In some examples, arrangement of a plurality of tooth structures (which may also be referred to as teeth) of the rack 122 may be arrangement of a plurality of tooth structures on a straight rack. In some other examples, the arrangement of the plurality of tooth structures of the rack 122 may be arrangement of a plurality of tooth structures on a helical rack.

The rack 122 is movable in the first direction X relative to the frame 11. That is, the frame 11 is fixed, and the rack 122 is movable in the first direction X.

The gear 121 is disposed coaxially with the roller 133. In some examples, the gear 121 is sleeved on the roller 133 in a contact manner. In some other examples, the gear 121 is connected to the roller 133 through a connecting member. For example, the connecting member is a rotating shaft 132, the roller 133 and the gear 121 are both sleeved on the rotating shaft 132, and the rotating shaft 132 may be rotatably disposed on the frame 11. The pair of rollers that are matched may be understood as a pair of rollers 133 whose axial directions are parallel and are intersected with (for example, perpendicular to) the first direction X.

The pair of gears 121 are both engaged with the rack 122. That is, one gear 121 is engaged with the rack 122, and the other gear 121 is also engaged with the rack 122. In some examples, the ratio of the number of racks 122 to the number of gears 121 is 1:2. For example, the number of racks 122 may be one, and the number of gears 121 may be two. For another example, the number of racks 122 may be two, and the number of gears 121 is four. In this way, a structure of the rack 122, the gears 121, and the rack 122 can more stably drive the pair of rollers to rotate.

The roller 133 is rotatably connected to the frame 11, which may be understood as the following content that both ends of the roller 133 are rotatably connected to the frame 11. For example, the frame 11 has a first via, and the roller 133 is rotatably disposed in the first via. For another example, the roller 133 and the sliding member 16 are rotatably disposed, and the sliding member 16 is slidably connected to the frame 11. The frame 11 may include two mounting boards opposite to each other in a second direction Y, and the mounting boards may be mounted on a preset station hereinafter. For example, the mounting board has a first via. For another example, the sliding member 16 is slidably connected to the mounting board. The frame 11 may further include a connecting board, and the connecting board connects the two mounting boards into a unitary structure. Positions of the rack 122 and the frame 11 are not limited. For example, the rack 122 may be located inside the frame 11. For another example, the rack 122 may be located outside the frame 11.

At least a portion of the rack 122 drives the pair of gears 121 to rotate synchronously, which may be understood as the following content that when the pair of gears 121 are engaged with at least a portion of the rack 122, the pair of gears 121 rotate simultaneously and at the same speed, so that the pair of rollers 133 have the same surface linear speed, and stop simultaneously.

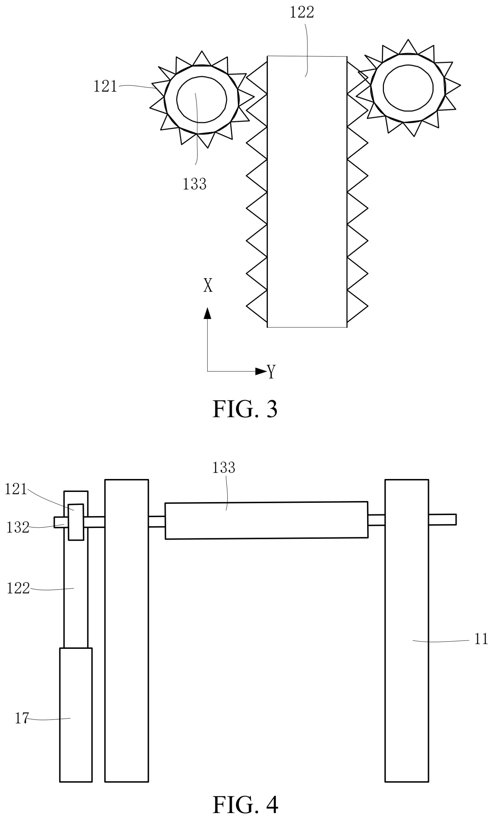

For example, referring to FIG. 1 to FIG. 3, when a tooth flank of the rack 122 is parallel to the first direction X, the rack 122 may be referred to as a straight rack. For example, the straight rack may have two opposite tooth flanks; and for another example, the rack 122 may further include a first rack and a second rack, and a tooth flank of the first rack is opposite to a tooth flank of the second rack. The two tooth flanks of the straight rack are different from two opposite tooth flanks that a rack 122 hereinafter has, but the straight rack and the rack 122 hereinafter are the same in other aspects (such as a mounting position and a connection relationship). Similarly, tooth flanks of a first rack and a second rack included in the straight rack are different from tooth flanks of a first rack 1221 and a second rack 1222 included in the rack 122 hereinafter, but the first rack and the second rack included in the straight rack and the first rack 1221 and the second rack 1222 included in the rack 122 hereinafter are the same in other aspects (such as a mounting position and a connection relationship). Details are not described again.

When the rack 122 is a straight rack, during the movement of the rack 122 in the first direction X, all portions of the rack 122 drive the pair of gears 121 to rotate synchronously. In this case, the roller 133 is rotatably connected to the frame 11, and the roller 133 is not slidably connected to the frame 11, so that a distance between the two rollers 133 is unchanged. The frame 11 is provided with a first via. for example, the roller 133 is located in the first via, and the roller 133 is in clearance fit with the first via; and for another example, the roller 133 is disposed in the first via through a bearing. In a possible implementation, the rotating shaft 132 is disposed in the first via through a bearing.

In this way, when the rack 122 is a straight rack, the distance between the two rollers 133 is adjusted to be the same as the width or length of the electrode assembly, and the electrode assembly can be smoothed by using the two rollers 133.

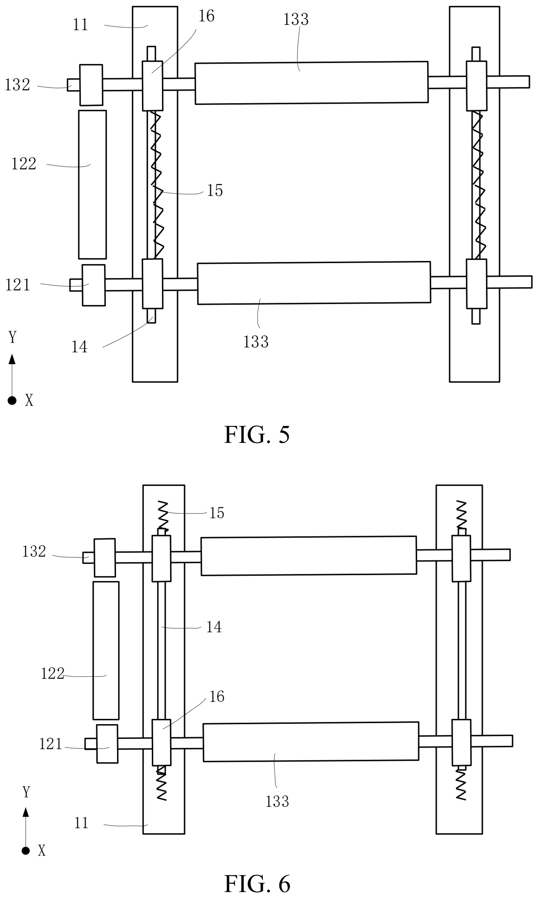

For another example, referring to FIG. 1 and FIG. 5, during the movement of the rack 122 in the first direction X, a portion of the rack 122 drives the pair of gears 121 to rotate synchronously, and the portion of the rack 122 may be understood as a straight rack. When the rack 122 is not a straight rack, because the pair of gears 121 is engaged with the rack 122, a distance between the pair of gears 121 changes, that is, a distance between the pair of rollers 133 in the second direction Y changes. In this case, the rack 122 is described in detail below, and will not be repeated.

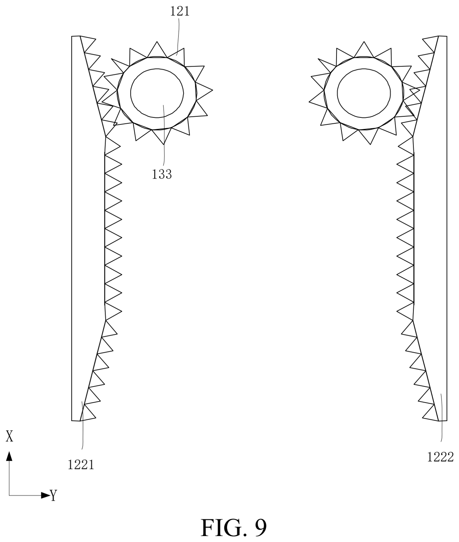

In some embodiments, referring to FIG. 1 and FIG. 5 to FIG. 9, the smoothing apparatus 1 further includes an elastic member 15 and a pair of sliding members 16; the sliding member 16 is slidably connected to the frame 11, and the sliding member 16 slides in the second direction Y relative to the frame 11; the roller 133 is rotatably connected to the sliding member 16; the elastic member 15 is configured to drive the pair of sliding members to move close to or away from each other in the second direction Y; and the second direction Y is perpendicular to the first direction X and perpendicular to an axial direction of the roller 133. As the rack 122 moves in the first direction X, the distance between the pair of rollers 133 in the second direction Y gradually decreases to a preset spacing and then gradually increases.

In this way, as the rack 122 moves in the first direction X, the pair of sliding members are driven by the elastic member 15 to move close to or away from each other in the second direction Y, so that the pair of rollers 133 move close to or away from each other in the second direction Y, and the pair of gears 121 and the rack 122 are always engaged. As the rack 122 moves in the first direction X, the distance between the pair of rollers 133 in the second direction Y first gradually decreases to the preset spacing and then gradually increases. Therefore, when the distance between the two rollers 133 gradually decreases, the two rollers 133 gradually move close to the electrode assembly. When the distance between the two rollers 133 is the preset spacing, the two rollers 133 clamp the electrode assembly, so that the two rollers 133 smooth the electrode assembly; and linear speeds of outer surfaces of the two rollers 133 are the same as a speed at which a housing-entering apparatus pushes the electrode assembly, so that the electrode assembly can be placed into the housing, thereby reducing occurrence of wrinkles on the insulating protective film outside the electrode assembly. When the distance between the two rollers 133 gradually increases, the two rollers 133 gradually separate from the electrode assembly.

Engagement of the rack 122 and the pair of gears 121 in this embodiment replaces the drive motor, the belt, and the air cylinder in the pair of belt roller mechanisms in the related art. That is, the engagement of the rack 122 and the pair of gears 121 in this embodiment can implement functions of the drive motor, the belt, and the air cylinder in the related art, and also simplify the structure, thereby reducing costs.

The preset spacing may be understood as the following content that the rack 122 drives the pair of rollers 133 to rotate within a preset time, and within the preset time, the distance between the pair of rollers 133 in the second direction Y is unchanged, and the pair of rollers 133 rotate synchronously. That is, the preset spacing corresponds to the following case in which the gear 121 is engaged with a second tooth flank. The preset time is a time for inserting the electrode assembly into the housing, for example, a time for smoothing the electrode assembly.

The elastic member 15 may be a structure capable of generating an elastic force, and the elastic member 15 may be a spring and/or a shrapnel, etc. The elastic force of the elastic member 15 is used to drive the pair of rollers 133 to move close to or away from each other in the second direction Y. In some examples, a direction of the elastic force generated by the elastic member 15 is the second direction Y. In some other examples, an included angle exists between the elastic force generated by the elastic member 15 and the second direction Y, the elastic force has a component force in the second direction Y, and the component force can drive the pair of rollers 133 to move close to or away from each other in the second direction.

The pair of sliding members 16 move close to or away from each other in the second direction Y, which may be understood as the following content that one sliding member 16 does not move and the other sliding member 16 moves, or may be understood as the following content that both sliding members 16 are movable. The pair of rollers 133 move close to or away from each other in the second direction Y, which may be understood as the following content that one roller 133 does not move and the other roller 133 moves, or may be understood as the following content that both rollers 133 are movable.

The sliding member 16 is slidably connected to the frame 11, which may be understood as the following content that one sliding member 16 (which may be referred to as a first sliding member) is slidably connected to the frame 11, and the other sliding member 16 (which may be referred to as a second sliding member) is slidably connected to the frame 11. The roller 133 is rotatably connected to the sliding member 16, which may be understood as the following content that one roller 133 (which may be referred to as a first roller) is rotatably connected to the first sliding member, and the other roller 133 (which may be referred to as a second roller) is rotatably connected to the second sliding member.

The number of first sliding members may be at least two (for example, two, or for another example, three). The number of second sliding members may be at least two (for example, two, or for another example, three). For example, the number of first sliding members is the same as the number of second sliding connections. For another example, the number of first sliding members and the number of second sliding connections are both two.

In some other embodiments, as the rack 122 moves in the first direction X, the distance between the pair of rollers 133 in the second direction Y first gradually decreases to a preset spacing. In some other embodiments, as the rack 122 moves in the first direction X, the distance between the pair of rollers 133 in the second direction Y is a preset spacing and then gradually increases.

In some embodiments, referring to FIG. 1 and FIG. 5 to FIG. 7, in the second direction Y, the rack 122 has two opposite tooth flanks (in this case, the rack 122 may be referred to as a double-sided rack 122 or double-sided teeth), and the pair of gears 121 are respectively engaged with the two tooth flanks of the rack 122, where one of the two tooth flanks is an inwardly concave tooth flank, and the other tooth flank is parallel to the first direction X; or the two tooth flanks are both inwardly concave tooth flanks. In this way, the two gears 121 can be driven to rotate through one rack 122, simplifying the structure.

The inwardly concave tooth flank may be understood as the following content that a first-portion tooth flank (that is, a second-segment tooth flank 124 hereinafter) of the tooth flank is parallel to the first direction X; a second-portion tooth flank and a third-portion tooth flank of the tooth flank are located on a side that is of the first-portion tooth flank and that is away from an opposite tooth flank, and a first included angle exists between the second-portion tooth flank and the first-portion tooth flank, where the first included angle is greater than 90° and less than 180° (for example, 91°, 95°, 100°, 110°, 120°, 130°, 140°, 150°, 160°, 170°, or 179°); and a second included angle exists between the third-portion tooth flank and the first-portion tooth flank, where the second included angle is greater than 90° and less than 180° (for example, 91°, 95°, 100°, 110°, 120°, 130°, 140°, 150°, 160°, 170°, or 179°). In some examples, the second-portion tooth flank may be a curved (for example, an inferior arc) tooth flank, and in this case, the first included angle may be understood as an included angle between a tangent line of the curved tooth flank and the first-portion tooth flank. In some other examples, the second-portion tooth flank may be a linear tooth flank. The number of second-portion tooth flanks may be one segment of tooth flank, and in this case, the second-portion tooth flank may be referred to as a first-segment tooth flank 123 hereinafter. The number of second-portion tooth flanks may also be a plurality of segments of tooth flanks connected in sequence. For example, included angles between extension lines of the plurality of segments of tooth flanks and the first-portion tooth flank sequentially increase, sequentially decrease, or first increase and then decrease.

For the shape of the third-portion tooth flank, reference may be made to the related description of the shape of the second-portion tooth flank. For the number of third-portion tooth flanks, reference may be made to the related description of the number of second-portion tooth flanks. When the number of third-portion tooth flanks is one segment of tooth flank, the third-portion tooth flank may be referred to as a third-segment tooth flank hereinafter.

For example, one of the two tooth flanks is an inwardly concave tooth flank, and the other tooth flank is parallel to the first direction X. In this case, a gear 121 engaged with one tooth flank rotates and slides relative to the frame 11, and a gear 121 engaged with the other tooth flank rotates relative to the frame 11 and does not slide in the second direction Y. That is, the elastic member 15 drives the gear 121 engaged with the one tooth flank to move, and drives the gear 121 engaged with the other tooth flank not to move.

For another example, the two tooth flanks are both inwardly concave tooth flanks. In this case, the two gears 121 engaged with the two tooth flanks rotate relative to the frame 11 and also slide relative to the frame 11 with the sliding member 16. That is, the elastic member 15 drives both gears 121 engaged with the two tooth flanks to move.

In some embodiments, the inwardly concave tooth flank includes a first-segment tooth flank 123, a second-segment tooth flank 124, and a third-segment tooth flank 125 that are connected in sequence; the second-segment tooth flank 124 is parallel to the first direction X; and in the first direction X, sizes of a plurality of tooth structures of the first-segment tooth flank 123 first gradually decrease, and sizes of a plurality of tooth structures of the third-segment tooth flank 125 first gradually increase, where the size of the tooth structure is a size between a tooth structure and a center line of the rack 122 in the second direction Y; and the center line extends in the first direction X.

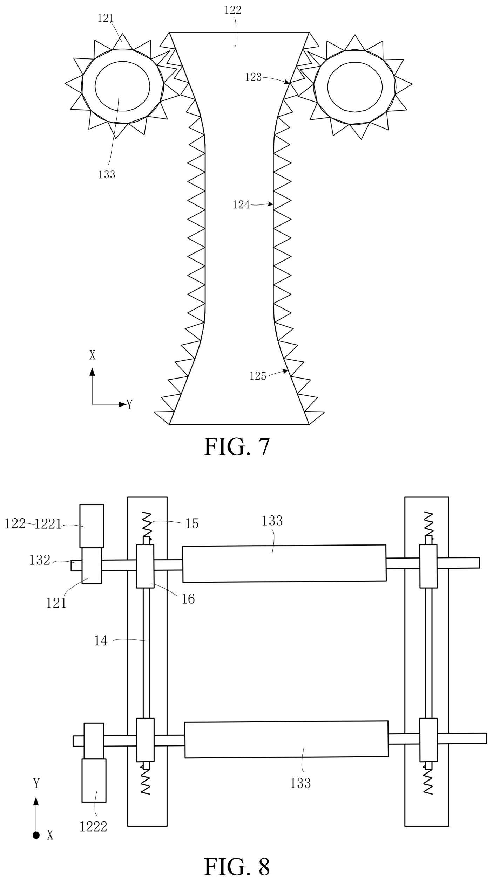

In this way, the first-segment tooth flank 123, the second-segment tooth flank 124, and the third-segment tooth flank 125 are all linear tooth flanks, and the first-segment tooth flank 123 and the third-segment tooth flank 125 are obliquely connected to both ends of the second-segment tooth flank 124, so that when the gear 121 is engaged with the inwardly concave tooth flank, a distance between the gear 121 and the center line gradually decreases to be constant and then increases. In addition, a linear tooth flank is easy to manufacture or less expensive. In this case, the first-segment tooth flank 123, the second-segment tooth flank 124, and the third-segment tooth flank 125 can form a shape as shown in FIG. 7.

In some embodiments, an included angle (for example, a first included angle) between the first-segment tooth flank 123 and the second-segment tooth flank 124 is 120° to 150° (for example, 120°, 125°, 130°, 135°, 140°, 145°, or 150°), and/or an included angle (for example, a second included angle) between the third-segment tooth flank 125 and the second-segment tooth flank 124 is 120° to 150° (for example, 120°, 125°, 130°, 135°, 140°, 145°, or 150°).

In this way, when the included angle is less than 120°, the size of the first-segment tooth flank 123 in the first direction X is relatively small, and when the rack 122 moves slightly, the gear 121 is engaged with the second-segment tooth flank 124, which makes a rotational speed of the gear 121 engaged with the first-segment tooth flank 123 relatively high. When the included angle is less than 150°, the size of the first-segment tooth flank 123 in the first direction X is relatively large, which makes the rack 122 relatively heavy. For an included angle effect of the third-segment tooth flank 125, reference may be made to the included angle effect of the first-segment tooth flank 123.

In some embodiments, the rack 122 is symmetrically disposed along a symmetry axis parallel to the first direction X and is symmetrically disposed along a symmetry axis parallel to the second direction Y. In this way, the rack 122 has a relatively simple structure and is easy to manufacture.

In some embodiments, referring to FIG. 6, the elastic member 15 includes two compression elastic members, the compression elastic members are connected between the frame 11 and the sliding members 16, and the compression elastic members are respectively located on sides that are of the two rollers 133 and that are away from each other. Alternatively, referring to FIG. 5, the elastic member 15 includes a tensile elastic member, and the tensile elastic member is connected between the pair of sliding members 16.

In this way, when the rack 122 moves in the first direction X, the two gears 121 are engaged with the rack 122, and the pair of rollers 133 move close to or away from each other under the action of pushing forces generated by the two compression elastic members and/or a pulling force generated by the tensile elastic member.

For example, the elastic member 15 includes two compression elastic members, the compression elastic members are connected between the frame 11 and the sliding members 16, and the compression elastic members are respectively located on sides that are of the two rollers 133 that are away from each other. For another example, the elastic member 15 includes a tensile elastic member, and the tensile elastic member is connected between the pair of sliding members 16. For another example, the elastic member 15 includes two compression elastic members, the compression elastic members are connected between the frame 11 and the sliding members 16, and the compression elastic members are respectively located on sides that are of the two rollers 133 and that are away from each other. The elastic member 15 includes a tensile elastic member, and the tensile elastic member is connected between the pair of sliding members 16.

The elastic member 15 and the frame 11 may be fixedly connected. For example, the fixed connection may be welding, gluing, etc, or may be a detachable connection, for example, the elastic member 15 is hung on a hook of the frame 11. The elastic member 15 and the sliding member 16 may be fixedly connected. For example, the fixed connection may be welding, gluing, etc, or may be a detachable connection, for example, the elastic member 15 is hung on a hook of the sliding member 16.

The compression elastic members are respectively located on sides that are of the two rollers 133 and that are away from each other, which may be understood as the following content that one compression elastic member is located on a side that is of the first roller and that is away from the second roller, and the other compression elastic member is located on a side that is of the second roller and that is away from the first roller.

The elastic member 15 includes two compression elastic members, and the compression elastic members are connected between the frame 11 and the sliding members 16, which may be understood as the following content that one compression elastic member (which may be referred to as a first compression elastic member) is connected between the frame 11 and the first sliding member, and the other compression elastic member (which may be referred to as a second compression elastic member) is connected between the frame 11 and the second sliding member. The number of first compression elastic members and the number of second compression elastic members may both be at least one. For example, the number of first compression elastic members and the number of second compression elastic members are equal, and may both be, for example, two.

The number of tensile elastic members may be at least one, and the at least one tensile elastic member is connected between the pair of sliding members 16.

In some embodiments, the elastic member 15 includes two tensile elastic members, the tensile elastic members are connected between the frame 11 and the sliding members 16, and the tensile elastic members are located between the pair of rollers 133. In this way, when the rack 122 moves in the first direction X, the two gears 121 are engaged with the rack 122, and the pair of rollers 133 move close to or away from each other under the action of tensile forces generated by the two tensile elastic members.

In some embodiments, referring to FIG. 1, FIG. 8, and FIG. 9, the rack 122 includes a first rack 1221 and a second rack 1222 that are arranged in the second direction Y; and the pair of gears 121 are located between the first rack 1221 and the second rack 1222, and are respectively engaged with a tooth flank of the first rack 1221 and a tooth flank of the second rack 1222, where the tooth flank of the first rack 1221 is an outwardly convex tooth flank, and the tooth flank of the second rack 1222 is parallel to the first direction X; or the tooth flank of the first rack 1221 and the tooth flank of the second rack 1222 are both outwardly convex tooth flanks.

In this way, the first rack 1221 and the second rack 1222 are respectively engaged with the two gears 121, and when the first rack 1221 and the second rack 1222 move synchronously in the first direction X, the first rack 1221 and the second rack 1222 drive the two gears 121 to rotate. When the total weight of the first rack 1221 and the second rack 1222 is not changed, the distance between the two rollers 133 is changed by changing mounting positions of the first rack 1221 and the second rack 1222, so that the pair of rollers 133 can clamp electrode assemblies with different sizes, etc.

For example, to facilitate synchronous movement of the first rack 1221 and the second rack 1222 in the first direction X, the first rack 1221 and the second rack 1222, for example, are connected into a unitary structure through a connecting member, and the first rack 1221 and the second rack 1222, for another example, are mounted on the same component (for example, mounted on the above drive member 17).

The pair of gears 121 are located between the first rack 1221 and the second rack 1222, which may be understood as the following content that the first rack 1221, the pair of gears 121, and the second rack 1222 are sequentially arranged in the second direction Y. For example, the first rack 1221 and the second rack 1222 may be disposed directly opposite to each other, or may be disposed in a staggered manner.

The outwardly convex tooth flank may be understood as the following content that a fourth-portion tooth flank of the tooth flank is parallel to the first direction X, a fifth-portion tooth flank and a sixth-portion tooth flank of the tooth flank are located between the fourth-portion tooth flank and a side face opposite to the tooth flank, and a third included angle exists between the fifth-portion tooth flank and the fourth-portion tooth flank, where the third included angle is greater than 90° and less than 180° (for example, 91°, 95°, 100°, 110°, 120°, 130°, 140°, 150°, 160°, 170°, or 179°); and a fourth included angle exists between the sixth-portion tooth flank and the fourth-portion tooth flank, where the fourth included angle is greater than 90° and less than 180° (for example, 91°, 95°, 100°, 110°, 120°, 130°, 140°, 150°, 160°, 170°, or 179°). In some examples, the fifth-portion tooth flank may be a curved (for example, an inferior arc) tooth flank, and in this case, the third included angle may be understood as an included angle between a tangent line of the curved tooth flank and the fourth-portion tooth flank. In some other examples, the fifth-portion tooth flank may be a linear tooth flank. The number of fifth-portion tooth flanks may be one segment of tooth flank. The number of second-portion tooth flanks may be a plurality of segments of tooth flanks connected in sequence. For example, included angles between extension lines of the plurality of segments of tooth flanks and the fourth-portion tooth flank sequentially increase, sequentially decrease, or first increase and then decrease.

For the shape of the sixth-portion tooth flank, reference may be made to the related description of the shape of the fifth-portion tooth flank. For the number of sixth-portion tooth flanks, reference may be made to the related description of the number of fifth-portion tooth flanks.

For example, the tooth flank of the first rack 1221 is an outwardly convex tooth flank, and the tooth flank of the second rack 1222 is parallel to the first direction X. In this case, a gear 121 engaged with the tooth flank of the first rack 1221 rotates and slides relative to the frame 11, and a gear 121 engaged with the tooth flank of the second rack 1222 rotates relative to the frame 11 and does not slide in the second direction Y. That is, the elastic member 15 drives the gear 121 engaged with the tooth flank of the first rack 1221 to move, and drives the gear 121 engaged with the tooth flank of the second rack 1222 not to move.

For another example, the tooth flank of the first rack 1221 and the tooth flank of the second rack 1222 are both outwardly convex tooth flanks. In this case, the two gears 121 engaged with the tooth flank of the first rack 1221 and the tooth flank of the second rack 1222 rotate and slide relative to the frame 11. That is, the elastic member 15 drives both gears 121 engaged with the tooth flank of the first rack 1221 and the tooth flank of the second rack 1222 to move.

The distance between the two rollers 133 can be changed both in the embodiment in which the rack 122 includes two opposite tooth flanks and in the embodiment in which the rack 122 includes the first rack 1221 and the second rack 1222. Therefore, for description and explanation of the embodiment in which the rack 122 includes the first rack 1221 and the second rack 1222, reference may be made to the related description and explanation of the embodiment in which the rack 122 includes two opposite tooth flanks. For example, the elastic member 15 includes a compression elastic member, and the compression elastic member is connected between the pair of sliding members 16; and/or the elastic member 15 includes two tensile elastic members, the tensile elastic members are connected between the frame 11 and the sliding members 16, and the tensile elastic members are respectively located on sides that are of the two rollers 133 and that are away from each other.

In some embodiments, referring to FIG. 5 and FIG. 6, the smoothing apparatus further includes a sliding rail 14, the sliding rail 14 is disposed on the frame 11, and the sliding member 16 is slidably disposed on the sliding rail 14; or the frame 11 has a sliding groove, and the sliding member 16 is slidably disposed on the sliding groove. In this way, the provided sliding rail 14 and/or sliding groove can enable the sliding member 16 to slide relative to the frame 11.

For example, the smoothing apparatus further includes a sliding rail 14, the sliding rail 14 is disposed on the frame 11, and the sliding member 16 is slidably disposed on the sliding rail 14. In some examples, the sliding rail 14 is disposed on the top of the frame 11. For another example, the frame 11 has a sliding groove, and the sliding member 16 is slidably disposed on the sliding groove. For another example, the smoothing apparatus further includes a sliding rail 14, the sliding rail 14 is disposed on the frame 11, and the sliding member 16 is slidably disposed on the sliding groove and the sliding rail 14. In some examples, the sliding member slides on the sliding rail 14 and the sliding groove simultaneously. For example, the sliding member is located between the sliding rail 14 and the sliding groove, so that two opposite portions of the sliding member are respectively slidably connected to the sliding rail and the sliding groove. For another example, the sliding rail 14 and the sliding groove are disposed side by side, so that portions of the sliding member on the same side are all slidably connected to the sliding rail and the sliding groove. In some other examples, the sliding rail 14 and the sliding groove are connected, and have the same extension direction.

In some embodiments, the sliding member 16 has a mounting hole, and the roller 133 is rotatably disposed in the mounting hole. In this way, a rotational connection between the sliding member 16 and the roller 133 can be implemented without the need for other components.

For example, the roller 133 is in clearance fit with the mounting hole, and the roller 133 is inserted into the mounting hole. For another example, the roller 133 is rotatably disposed in the mounting hole through a bearing. In some examples, the rotating shaft 132 is rotatably disposed in the mounting hole through the roller 133.

In some embodiments, the sliding member 16 is provided with a bearing seat, and the roller 133 is rotatably disposed in the bearing seat.

In some embodiments, when at least a portion of the rack 122 drives the pair of gears 121 to rotate synchronously, the gears 121 rotate at a constant speed.

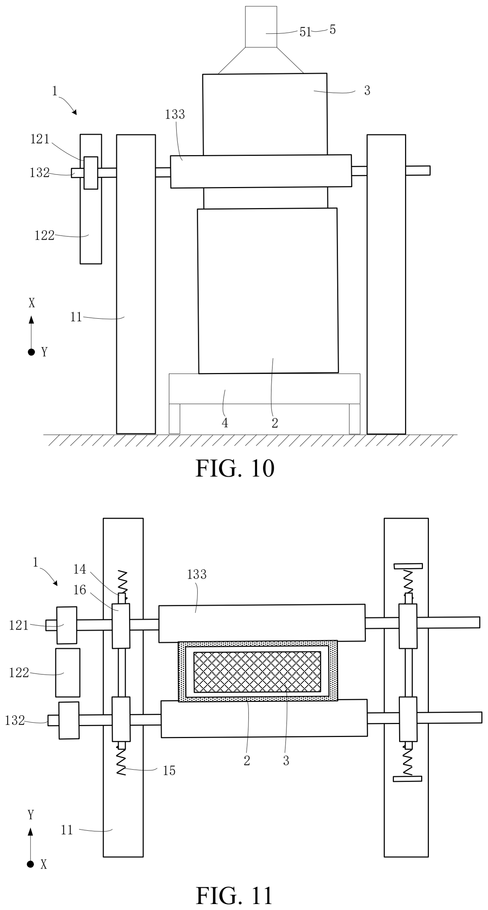

The embodiments of the present application further provide a battery assembly system. Referring to FIG. 10 and FIG. 11, the battery assembly system is configured to mount an electrode assembly 3 coated with an insulating protective film into a housing 2. In some examples, the battery assembly system is further configured to encapsulate the electrode assembly 3 into the housing 2 (for example, snap an upper cap on the housing 2) to form a battery. The embodiments of the present disclosure are described by taking an example in which the battery assembly system is configured to mount the electrode assembly 3 coated with the insulating protective film into the housing 2.

The battery assembly system may include a conveying device 4, an assembly device 5, and a smoothing apparatus 1, where the conveying device 4 is used to convey a structure to be assembled to each station of the assembly device 5; the station of the assembly device 5 includes a housing-entering apparatus 51; the housing-entering apparatus 51 is used to mount the electrode assembly 3 into the housing 2 from an open end of the housing 2; and when the electrode assembly 3 is mounted into the housing 2, the pair of rollers 133 of the smoothing apparatus 1 are used to clamp and smooth the electrode assembly 3 passing through the pair of rollers 133. In this way, through synchronous rotation of the housing-entering apparatus 51 and the pair of rollers 133, the electrode assembly 3 is smoothed and then mounted into the housing 2, which can alleviate the problem of occurrence of wrinkles on the insulating protective film coated outside the electrode assembly 3.

The conveying device 4 includes a conveying line, and the conveying line may be a conveying structure formed by a conveying roller driven by a motor in cooperation with a conveying belt, or may be a conveying structure formed by conveying chain links driven by a motor through a hinge joint, or may be an AGV conveying cart, as long as conveyance in at least one direction can be implemented and stability of a structure to be assembled can be supported and ensured.

The housing-entering apparatus 51 is a pushing mechanism or a clamping mechanism, which can stably make the electrode assembly move toward the open end of the housing and enter an accommodating cavity through the open end. The pushing mechanism may be an air cylinder, an electric push rod, etc. The clamping mechanism may be a vacuum chuck, a clamping jaw mechanism, a clamping fork mechanism, etc. In some embodiments, when the pair of gears 121 rotate synchronously, linear speeds of outer surfaces of the rollers 133 are the same as a moving speed of the electrode assembly 3 pushed between the pair of rollers 133 by the housing-entering apparatus, to alleviate the problem of wrinkles on the insulating protective film of the electrode assembly 3 caused by the difference in speed between the two.

The electrode assembly 3 is an electrode assembly 3 coated with an insulating protective film. The material of the insulating protective film may be a material having an insulating function and a protective function, such as a resin.

The battery may include an end cap, the housing 2, and the electrode assembly 3. The housing 2 has an open end, and the end cap is snapped at the open end of the housing 2 to jointly define an accommodating cavity for accommodating the electrode assembly 3. That is, the electrode assembly 3 is mounted into the housing 2 through the open end and is snapped on the housing 2 through the end cap, so that the electrode assembly 3 is located in the accommodating cavity. For example, the end cap and the housing 2 are connected through screws, snaps, etc. In some examples, the battery may be referred to as a battery cell. The battery cell may include a lithium ion battery, a sodium ion battery, a magnesium ion battery, etc. The battery cell may be in the shape of a cylinder, a flat body, etc. The battery cell is generally classified into three types according to an encapsulated manner: a cylindrical battery cell, a square battery cell, and a pouch battery cell.

In some embodiments, a pole is provided on a wall that is of the housing 2 and that is opposite to the open end, the pole has a via, and the housing 2 and the end cap are connected to form an accommodating cavity in communication with the via; an active material coating portion of the electrode assembly 3 is provided in the housing 2, and a tab portion of the electrode assembly 3 passes through the via and is connected to a side that is of the pole and that is away from the accommodating cavity.

The station of the assembly device 5 may further include a tab welding apparatus, a tab piercing apparatus, a pole welding apparatus, and an end cap welding apparatus. The tab welding apparatus is used to weld a plurality of tab pieces of the electrode assembly to form a tab portion; the tab piercing apparatus is used to clamp the tab portion to pass through the via when the electrode assembly is mounted into the housing; and the pole welding apparatus is used to weld the tab portion passing through the via to the side that is of the pole and that is away from the accommodating cavity.

The tab welding apparatus is intended to form the tab portion after the tab pieces are pre-welded, which may be selected as an ultrasonic welding device as long as it can be ensured that a tab is welded in a stable clamping state. The tab piercing apparatus may adopt a clamping structure or a guiding structure, as long as the tab portion can be guided to smoothly pass through the via without interfering with the housing. The pole welding apparatus is intended to implement welding of the tab portion and the pole, and may be selected as a laser welding device. The end cap welding apparatus is intended to implement circumferential edge welding of the end cap and the open end of the housing, and may also be selected as a laser welding device.

In some embodiments, when there are a plurality of electrode assemblies 3, for example, two electrode assemblies, the assembly device 5 further includes a mating apparatus, and the mating apparatus is used to stack the plurality of electrode assemblies, so that tab pieces of two electrode assemblies are approximately opposite to each other, so that the conveying structure can convey the mated electrode assemblies to the tab welding apparatus for welding the tab pieces to facilitate the formation of tab portions.

In some embodiments, to ensure reliability of a battery assembly process, a dust removal station, an NG detection station, etc. may be further added between any two adjacent stations, which is not limited in this embodiment.

In some embodiments, when the distance between the pair of rollers 133 in the second direction Y first gradually decreases to a preset spacing and then gradually increases as the rack 122 moves in the first direction X, in a process of the housing-entering apparatus 51 mounting the electrode assembly 3 between the pair of rollers 133 into the housing 2, the rack 122 drives the pair of gears 121 to be engaged with each other, and under the action of the elastic member 15, the pair of rollers 133 gradually move close to the preset spacing in the second direction Y, and at the preset spacing, the pair of rollers 133 clamp the electrode assembly 3 and smooth the electrode assembly 3, and then the pair of rollers 133 gradually move away from each other in the second direction Y and release the electrode assembly 3.

A gap between the two rollers 133 is directly opposite to the open end of the housing 2. Smoothing the electrode assembly 3 may be understood as the following content that when an inclined electrode assembly 3 passes through the two rollers 133, the electrode assembly 3 is made to be directly opposite to the open end of the housing 2.

The foregoing is merely an embodiment of the present application, and is not intended to limit the scope of patent protection scope of the present application, and any equivalent structure or process modifications made by using the content of the description and the accompanying drawings of the present application, directly or indirectly applied in other related technical fields, are also included in the patent protection scope of the present application.

## Claims

1. A smoothing apparatus, comprising:
a frame;
a pair of rollers that are matched, wherein the rollers are rotatably connected to the frame and used to smooth a member to be smoothed; and
a drive mechanism, disposed on the frame and connected to the rollers, and used to drive the pair of rollers to rotate synchronously.

2. The smoothing apparatus according to claim 1, wherein
the drive mechanism comprises a rack and a pair of gears; the gear is disposed coaxially with the roller, and the pair of gears are both engaged with the rack; and the rack extends in a first direction and is movable in the first direction relative to the frame, wherein during movement of the rack in the first direction, at least a portion of the rack drives the pair of gears to rotate synchronously.

3. The smoothing apparatus according to claim 2, wherein
the smoothing apparatus further comprises an elastic member and a pair of sliding members; the sliding member is slidably connected to the frame, and the sliding member slides in a second direction relative to the frame; the roller is rotatably connected to the sliding member; the elastic member is configured to drive the pair of sliding members to move close to or away from each other in the second direction; and the second direction is perpendicular to the first direction and perpendicular to an axis direction of the roller; and
as the rack moves in the first direction, a distance between the pair of rollers in the second direction first gradually decreases to a preset spacing and then gradually increases.

4. The smoothing apparatus according to claim 3, wherein
in the second direction, the rack has two opposite tooth flanks, and the pair of gears are respectively engaged with the two tooth flanks of the rack, wherein
one of the two tooth flanks is an inwardly concave tooth flank, and the other tooth flank is parallel to the first direction; or the two tooth flanks are both inwardly concave tooth flanks.

5. The smoothing apparatus according to claim 4, wherein
the inwardly concave tooth flank comprises a first-segment tooth flank, a second-segment tooth flank, and a third-segment tooth flank that are connected in sequence; the second-segment tooth flank is parallel to the first direction; and in the first direction, sizes of a plurality of tooth structures of the first-segment tooth flank first gradually decrease, and sizes of a plurality of tooth structures of the third-segment tooth flank first gradually increase, wherein the size of the tooth structure is a size between a tooth structure and a center line of the rack in the second direction; and the center line extends in the first direction.

6. The smoothing apparatus according to claim 5, wherein
an included angle between the first-segment tooth flank and the second-segment tooth flank is 120° to 150°;
and/or
an included angle between the third-segment tooth flank and the second-segment tooth flank is 120° to 150°.

7. The smoothing apparatus according to any one of claims 4 to 6, wherein
the rack is symmetrically disposed along a symmetry axis parallel to the first direction and is symmetrically disposed along a symmetry axis parallel to the second direction.

8. The smoothing apparatus according to any one of claims 4 to 7, wherein
the elastic member comprises two compression elastic members, the compression elastic members are connected between the frame and the sliding members, and the compression elastic members are respectively located on sides that are of the two rollers and that are away from each other;
or
the elastic member comprises a tensile elastic member, and the tensile elastic member is connected between the pair of sliding members.

9. The smoothing apparatus according to claim 3, wherein
the rack comprises a first rack and a second rack that are arranged in the second direction; and the pair of gears are located between the first rack and the second rack, and are respectively engaged with a tooth flank of the first rack and a tooth flank of the second rack, wherein the tooth flank of the first rack is an outwardly convex tooth flank, and the tooth flank of the second rack is parallel to the first direction; or the tooth flank of the first rack and the tooth flank of the second rack are both outwardly convex tooth flanks.

10. The smoothing apparatus according to any one of claims 3 to 9, wherein
the smoothing apparatus further comprises a sliding rail, the sliding rail is disposed on the frame, and the sliding member is slidably disposed on the sliding rail;
or
the frame has a sliding groove, and the sliding member is slidably disposed on the sliding groove.

11. The smoothing apparatus according to any one of claims 3 to 9, wherein
the sliding member has a mounting hole, and the roller is rotatably disposed in the mounting hole.

12. A battery assembly system, comprising: a conveying device, an assembly device, and the smoothing apparatus according to any one of claims 1 to **11,** wherein the conveying device is used to convey a structure to be assembled to each station of the assembly device; the station of the assembly device comprises a housing-entering apparatus; the housing-entering apparatus is used to mount an electrode assembly into a housing from an open end of the housing; and when the electrode assembly is mounted into the housing, the pair of rollers of the smoothing apparatus are used to clamp and smooth the electrode assembly passing through the pair of rollers.
